# EUROPÄISCHE PATENTSCHRIFT

(11) **EP 3 322 958 B1**
(45) Veröffentlichungstag und Bekanntmachung des Hinweises auf die Patenterteilung: **08.04.2020**
(21) Anmeldenummer: 16759672.5
(22) Anmeldetag: 13.07.2016
(51) Int. Cl.: G01B 5/14, G01B 3/06, G09B 23/32, G01M 17/007

(54) **WEGAUFNEHMERANORDNUNG SOWIE CRASHTEST-DUMMY**
DISPLACEMENT TRANSDUCER ARRANGEMENT AND CRASH TEST DUMMY
SYSTÈME DE CAPTEUR DE DÉPLACEMENT ET MANNEQUIN ANTHROPOMORPHE

(30) Priorität: 15.07.2015 DE 102015008910; 26.07.2015 DE 102015009393
(43) Veröffentlichungstag der Anmeldung: 23.05.2018
(73) Patentinhaber: Pfeifer, Gerhard, 63867 Johannesberg (DE)
(72) Erfinder: Pfeifer, Gerhard, 63867 Johannesberg (DE)
(74) Vertreter: Rösler Rasch van der Heide & Partner
(86) Internationale Anmeldenummer: PCT/DE2016/000271
(87) Internationale Veröffentlichungsnummer: WO 2017/008778

(56) Entgegenhaltungen:
- DE-A1-102013 106 703
- US-A1- 2005 206 910
- James H Mcelhaney: "Crash test device development; Repeatable Pete", , 30. Juni 1973 (1973-06-30), XP055312396, Gefunden im Internet: URL:https://deepblue.lib.umich.edu/bitstre am/handle/2027.42/528/28677.0001.001.pdf?s equence=2&isAllowed=y [gefunden am 2016-10-19]
- STEPHEN W ROUHANA ET AL: "A HIGH-SPEED SENSOR FOR MEASURING CHEST DEFLECTION IN CRASH TEST DUMMIES", 16TH INTERNATIONAL TECHNICAL CONFERENCE ON THE ENHANCED SAFETY OF VEHICLES (ESV), 30. Juni 1998 (1998-06-30), XP055312416,

## Beschreibung

Nachfolgend werden eine Wegaufnehmeranordnung zur Messung einer Intrusion in einem Crashtest-Dummy sowie ein entsprechend ausgerüsteter Crashtest-Dummy beschrieben. Der Distanzaufnahmer weist eine erste Aufhängung und eine zweite Aufhängung auf, wobei ein Abstand zwischen erster Aufhängung und zweiter Aufhängung veränderlich und messbar ist.

Crashtest-Dummys werden in der Automobilindustrie zur praktischen Überprüfung der Fahrsicherheit von Kraftfahrzeugen verwendet. Zur Zulassung neuer Kraftfahrzeuge sind eine Vielzahl von unterschiedlichen, normierten Tests vorgeschrieben. Diese Tests sehen zum Beispiel einen Frontalcrash mit Vollüberdeckung, Frontalcrash mit Teilüberdeckung, Seitencrash und dergleichen mehr vor. Die Versuche werden mit dem zuzulassenden Kraftfahrzeug mit wenigstens einem darin sitzenden Crashtest-Dummy durchgeführt. Crashtest-Dummys simulieren während der Versuche Menschen und zeichnen mittels komplexer Sensorik die Einflüsse des Zusammenstoßes auf sie auf. So sind zum Beispiel Beschleunigungssensoren an vielen Punkten üblich, z.B. im Kopf und in der Brust. Des Weiteren werden vielfach Kraftsensoren verwendet, die Kraftverläufe auf einzelne Körperteile, beispielsweise Knie, Abdomen, Thorax, Halswirbelsäule und dergleichen mehr messen.

Einer der kritischen gesundheitsgefährdenden Faktoren bei einem Unfall ist die Brustintrusion beim Zusammenprall. Crashtest-Dummys sind mit künstlichen Rippenbögen ausgestattet, die menschliche Rippenbögen simulieren. Die Intrusion menschlicher Rippen kann beim Unfall, beispielsweise bei einem Seitenaufprall, so groß sein, dass Rippen brechen, was unter Umständen eine Gefahr für die darunterliegenden Organe darstellen könnte. Zur Messung von Intrusionen bei entsprechenden Crashtest-Versuchen sind Wegaufnehmeranordnungen im Stand der Technik bekannt, die einerseits an einer Wirbelsäule des Crashtest-Dummys, andererseits an dem Rippenbogen angeordnet werden.

An die Wegaufnehmeranordnungen werden eine Vielzahl von Anforderungen gestellt. Sie müssen die Distanzen präzise messen können und gleichzeitig hinreichend schnell sein, um die Dynamik der Intrusion erfassen zu können, da diese neben den Absolutwerten einen großen Einfluss auf das Verletzungsrisiko der menschlichen Insassen hat. Die Wegaufnehmeranordnungen müssen bis zu 18 m/s messen können.

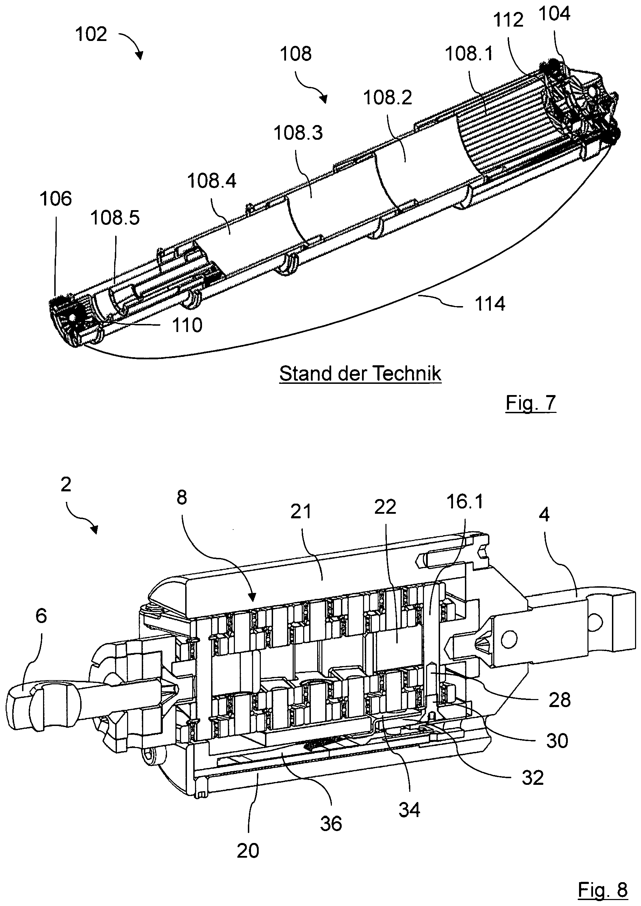

Eine bekannte Wegaufnehmeranordnung, der im Zusammenhang mit Fig. 7 eingehender erläutert ist, sieht eine Anordnung von gegeneinander verschiebbaren Hülsen zwischen einer ersten Aufhängung an der Wirbelsäule und einer zweiten Aufhängung an dem Rippenbogen vor. An der zweiten Aufhängung ist im Inneren der Hülsenanordnung ein Leuchtmittel, beispielsweise eine IR-LED, vorgesehen, die einen an der anderen Aufhängung vorgesehenen Sensor anstrahlt. Der Abstand von Lichtquelle und Sensor bestimmt die Lichtmenge, die am Sensor ankommt, sodass die Lichtmenge ein Maß für die Distanz ist. Die Verwendung dieser Anordnung bedingt, dass an beiden Aufhängungen eine Stromversorgung vonnöten ist, was im Stand der Technik mittels eines außerhalb der Hülsen geführten Kabels gelöst wird. Dieses Kabel kann leicht beschädigt werden, wodurch die Wegaufnehmeranordnung unbrauchbar wird. Des Weiteren sind die gegeneinander verschiebbaren Hülsen bei einer Distanzänderung bedingt durch eine Intrusion zufällig gegeneinander verschiebbar, sodass bei einem gegebenen Abstand zwischen den beiden Aufhängungen eine zufällige Hülsenkonfiguration vorliegt. Dies bedingt Varianzen in dem gemessenen Lichtsignal, da die Hülsenwände lichtreflektierend sind und die Summe aller Lichtpfade für unterschiedliche Hülsenkonfigurationen zu unterschiedlichen Lichtleistungen am Empfänger führen. Zudem benötigen Leuchtmittel und Sensor relativ viel Energie, sodass eine vergleichsweise hochenergetische Stromversorgung notwendig ist. Die Versorgungsspannung beträgt 5V, wohingegen übliche Messverstärker in Crashtest-Dummys mit 2,5 V bis 3,3 V arbeiten. Daher sind Sonderlösungen zur Energieversorgung erforderlich. Die Abwärme des Messverstärkers und des Lichts heizt die Wegaufnehmeranordnung und den Crashtest-Dummy langsam auf, was Einfluss auf den Dunkelstrom des Sensors hat. Die Messgenauigkeit hängt damit von der Temperatur der Wegaufnehmeranordnung ab. Weiterhin ist die Temperatur des Crashtest-Dummys während der Messung definiert. Zudem ist die Kalibrierung entsprechender Wegaufnehmeranordnungen aufgrund der vorgenannten Umstände schwierig. Der Sensor liefert zudem ein nichtlineares Spannungssignal, das nachträglich linearisiert werden muss. Dazu muss die Nullposition des Sensors bekannt sein. Durch die nachträgliche Linearisierung steigt die Messungenauigkeit. Bei großem Abstand zum Leuchtmittel ist zudem das Siganl-Rausch-Verhältnis ungünstig.

Desweiteren sind Wegaufnehmeranordnungen bekannt, die mit Seilzugpotentiometern arbeiten. Diese haben niedrige Grenzen hinsichtlich der erreichbaren Geschwindigkeiten. Bei Geschwindigkeiten größer als 4 m/s kann das Seil durchhängen, was die Messergebnisse verfälscht.

Zudem sind Stangenpotentiometer bekannt, die aber aufgrund ihrer Konstruktion nur die halbe Maximallänge als Meßstrecke zur Verfügung stellen. Deren maximale Verfahrgeschwindigkeit beträgt 10 m/s.

Die DE 10 2010 019 656 A1 offenbart ein Messgerät zur Überprüfung positionierender Maschinen auf geometrische Fehler zwischen zwei Drehgelenken mit Lagerkugelkörpern, die über ein teleskopierbares Verbindungselement mechanisch miteinander verbunden sind, und einer Einrichtung zur optischen Längenmessung des Abstandes der Lagerkugelkörper voneinander mit zumindest einer Reflektoreinrichtung und einem Messstrahl, wobei die zumindest eine Reflektoreinrichtung in dem Lagerkugelkörper dergestalt angeordnet ist, dass der Bezugspunkt für die optische Längenmessung mit dem Drehpunkt des Drehgelenks übereinstimmt. Dabei wird ein Verbindungselement mit Scherenkinematik beschrieben.

Ein Crashtest-Dummy mit einer integrierten Wegaufnehmeranordnung wird in der Veröffentlichung "Crash test device development: Repeatable Pete", James H. McElhaney, Juni 1973 (https://deepblue.lib.umich.edu/bitstream/handle/2027.42/528/28677.0001.001.pdf) beschrieben.

Somit stellt sich die Aufgabe, eine Wegaufnehmeranordnung der eingangs genannten Art dahingehend auszugestalten, dass dieser mit sehr geringem Energiebedarf präzise eine Intrusion in einem Crashtest-Dummy messen kann.

Die Aufgabe wird gelöst durch eine Wegaufnehmeranordnung gemäß Anspruch 1 sowie durch einen Crashtest-Dummy gemäß dem nebengeordneten Anspruch 6.

Weiterführende Ausgestaltungen des Distanznehmers sind Gegenstand der abhängigen Ansprüche.

Die nachfolgend beschriebene Wegaufnehmeranordnung dient zur Messung von Intrusionen in einem Crashtest-Dummy. Solche Intrusionen können insbesondere bei Rippenbögen relevant sein. Die Wegaufnehmeranordnung weist eine erste Aufhängung und eine zweite Aufhängung auf. Die erste Aufhängung kann zum Beispiel zur Anordnung an einer Wirbelsäule eines Crashtest-Dummys vorgesehen sein, die zweite Aufhängung zur Anordnung an dem Rippenbogen. Die Wegaufnehmeranordnung ist so gestaltet, dass ein Abstand zwischen erster Aufhängung und zweiter Aufhängung veränderlich ist.

Zudem ist ein Wegaufnehmer zur Messung des Abstands zwischen erster Aufhängung und zweiter Aufhängung vorgesehen. Des Weiteren ist vorgesehen, dass erste Aufhängung und zweite Aufhängung über eine Scherenhubmechanik miteinander verbunden sind. Eine bestimmte Scherenhubmechanik hat bei einem gegebenen Abstand zwischen einem ersten Ende und einem zweiten Ende der Scherenhubmechanik stets einen eindeutig definierten Zustand. Dieser eindeutig definierte Zustand eliminiert mögliche Ungenauigkeiten in der Messung durch Anordnungen, die keinen derart eindeutigen Zusammenhang zwischen Länge und eigener Konfiguration haben, wie z.B. die im Stand der Technik bekannten Hülsenanordnungen. Scherenhubmechaniken können darüber hinaus einen großen Hub haben, sodass die Eigenschaften bekannter Hülsenanordnungen nachgebildet werden können.

Dabei ist der Wegaufnehmer als Linearpotentiometer ausgebildet.

Scherenhubmechaniken weisen Gelenke auf, die sich lediglich axial bewegen. Die Position eines dieser Gelenke ist somit repräsentativ für die Gesamtlänge der Scherenhubmechanik. Durch Verwendung von Linearpotentiometern lassen sich relativ große Messhübe verwirklichen, wodurch die Auslesegenauigkeit des Potentiometers steigt.

Drehpotentiometer sowie Linearpotentiometer können mit sehr wenig Energie betrieben werden. Die Stromversorgung entsprechender Linearpotentiometer kann daher sehr gering ausfallen. Eine gesonderte Energieversorgung für die Wegaufnehmeranordnung innerhalb des Crashtest-Dummys, wie sie für bekannte Wegaufnehmeranordnungen notwendig ist, kann entfallen. Zudem heizen sich entsprechende Potentiometer im Betrieb aufgrund ihrer geringen Energieaufnahme nicht signifikant auf. Eine davon ausgehende Wärmeabstrahlung in den Crashtest-Dummy wird somit unterbunden. Die Präzision entsprechender Potentiometer sowie die mögliche zeitliche Auflösung reichen aus, um den engen Toleranzanforderungen an Sensoren für Crashtestversuche zu erfüllen.

Das Linearpotentiometer ist ein Schleifpotentiometer. Entsprechende Schleifpotentiometer können seitlich kontaktiert werden, wodurch der notwendige Bauraum für den Wegaufnehmer sinkt.

Dabei ist vorgesehen, dass das Schleifpotentiometer einen Schleifkontakt aufweist, der mit der Scherenhubmechanik über eine der Mittenachsen der Scherenhubmechanik verbunden ist.

In einer ersten weiterführenden Ausgestaltung kann vorgesehen sein, dass ein Schleifkontakt des Linearpotentiometers kraftschlüssig, reibschlüssig oder stoffschlüssig mit der Scherenhubmechanik verbunden ist. Hierdurch wird der Schleifkontakt des Linearpotentiometers zusammen mit der Scherenhubmechanik bewegt, sodass die Position des Schleifkontakts maßgebend für den Abstand zwischen erster Aufhängung und zweiter Aufhängung der Wegaufnehmeranordnung ist. Der Schleifkontakt kann direkt mit der Scherenhubmechanik verbunden sein.

Der Schleifkontakt kann in einer Ausgestaltung eine Aufnahme aufweisen, in die Teile der Scherenhubmechanik eingreift um die Aufnahme und damit den Schleifkontakt zusammen mit der Scherenhubmechanik zu bewegen. Die entsprechende Kopplung zwischen Schleifkontakt und Scherenhubmechanik findet in einer Ausgestaltung in einem Bereich statt, in dem die Scherenhubmechanik nur linear bewegt wird, beispielsweise an einer Mittenachse.

In einer anderen weiterführenden Ausgestaltung kann das Linearpotentiometer in Erstreckungsrichtung zwischen erster Aufhängung und zweiter Aufhängung seitlich der Scherenhubmechanik angeordnet sein. Eine entsprechende Anordnung des Linearpotentiometers erlaubt einen sehr kompakten Aufbau der Wegaufnehmeranordnung. Bei Verwendung von Linearpotentiometern ist zudem der Abgriff der entsprechenden aktuellen Konfiguration der Scherenhubmechanik einfach.

In einer anderen weiterführenden Ausgestaltung kann die Scherenhubmechanik eine Mehrzahl von aneinander angeordneten Scherenarmen aufweisen, die ein- und ausschwenkbar sind. Die maximale Distanz zwischen erster Aufhängung und zweiter Aufhängung hängt dann von der Anzahl von Scherenarmen, deren Länge sowie ihrem maximalen relativen Winkel zueinander ab. Die Verwendung einer Mehrzahl entsprechender Scherenarme, die in einer Reihe aneinander gekoppelt sind, erlaubt einen räumlich kompakten Aufbau, der mit den Gegebenheiten im Inneren eines Crashtest-Dummys kompatibel ist.

In einer weiterführenden Ausgestaltung können die Scherenarme Anschlagflächen aufweisen. Diese Anschlagflächen können durch Anschlagflächen benachbarte Scherenarme berührt werden, wodurch bei einer großen Intrusion eine relativ flächenhafte Kraftweiterleitung zwischen erster Aufhängung und zweiter Aufhängung möglich ist. Eine Beschädigung der Mechanik der Wegaufnehmeranordnung kann somit verhindert werden.

In einer anderen weiterführenden Ausgestaltung der Wegaufnehmeranordnung kann die erste Aufhängung um wenigstens eine Achse schwenkbar sein. Hierdurch können auch Ausweichbewegungen der Rippenbögen gemessen werden. Die erste Aufhängung kann auch um zwei Achsen, insbesondere zueinander senkrecht stehende Achsen, schwenkbar sein, was die Messgenauigkeit weiter erhöht.

Auch die zweite Aufhängung kann in manchen Ausgestaltungen um eine oder um zwei Achsen schwenkbar sein.

Ein erster unabhängiger Gegenstand betrifft einen Crashtest-Dummy mit wenigstens einer Wegaufnehmeranordnung der zuvor beschriebenen Art. Ein entsprechender Crashtest-Dummy kann Intrusionen sehr präzise messen, sowohl hinsichtlich der absoluten Werte als auch hinsichtlich der Dynamik. Des Weiteren ist eine niederenergetische Energieversorgung zum Betrieb der entsprechenden Sensorik ausreichend.

Nachfolgend werden zwei Ausführungsbeispiele dargestellt. Es zeigen schematisch:
- Fig. 1: eine Wegaufnehmeranordnung in ausgefahrener Position in perspektivischer Darstellung;
- Fig. 2: eine Schnittdarstellung durch die Wegaufnehmeranordnung aus Fig. 1 in anderer perspektivischer Ansicht;
- Fig. 3: die Wegaufnehmeranordnung aus Fig. 1 in einer Mittenstellung in perspektivischer Darstellung;
- Fig. 4: eine Schnittdarstellung durch die Wegaufnehmeranordnung nach Fig. 3 in perspektivischer Darstellung;
- Fig. 5: die Wegaufnehmeranordnung aus Fig. 1 in eingefahrener Stellung in perspektivischer Darstellung;
- Fig. 6: eine Schnittdarstellung durch die Wegaufnehmeranordnung nach Fig. 5 in perspektivischer Darstellung,
- Fig. 7: eine Wegaufnehmeranordnung aus dem Stand der Technik in perspektivischer Darstellung;
- Fig. 8: eine Schnittdarstellung durch die Wegaufnehmeranordnung aus Fig. 6 mit einer Darstellung der Kopplung mit einem Potentiometer in perspektivischer Darstellung,
- Fig. 9: eine Schnittdarstellung durch die Wegaufnehmeranordnung aus Fig. 6 mit einer Darstellung der Kopplung mit einem Potentiometer in planarer Darstellung,
- Fig. 10: eine vergrößerte Darstellung der Kopplung zwischen Scherenhubmechanik und Potentiometer,
- Fig. 11: eine Wegaufnehmeranordnung gemäß einem Beispiel, das das Verständnis der Erfindung erleichtert, in ausgefahrener Position in perspektivischer Darstellung,
- Fig. 12: der Wegaufnehmeranordnung aus Fig. 11 in eingefahrener Position in perspektivischer Darstellung, sowie
- Fig. 13: der Wegaufnehmeranordnung aus Fig. 11 in mittlerer Stellung in perspektivischer Darstellung.

In den nachfolgenden Ausführungsbeispielen sind gleiche oder gleichwirkende Bauteile zur besseren Lesbarkeit mit gleichen Bezugszeichen versehen.

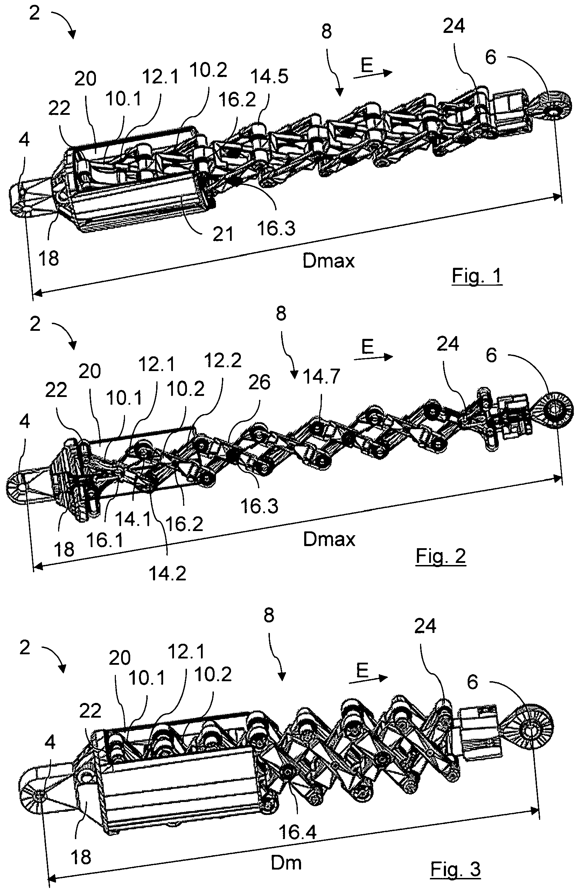

Fig. 1 zeigt eine Wegaufnehmeranordnung 2 in schematischer perspektivischer Darstellung.

Die Wegaufnehmeranordnung 2 weist eine erste Aufhängung 4 sowie eine zweite Aufhängung 6 auf. Die erste Aufhängung 4 dient zur Anordnung an einer Wirbelsäule im Inneren eines nicht dargestellten Crashtest-Dummys. Die zweite Aufhängung 6 dient zur Anordnung an einem Rippenbogen des Crashtest-Dummys.

Zwischen erster Aufhängung 4 und zweiter Aufhängung 6 ist eine Scherenhubmechanik 8 vorgesehen. Die Scherenhubmechanik weist eine Vielzahl von Scherenarmen 10, 12 auf, von denen nur ausgewählte einzelne Scherenarme 10.1, 10.2, 12.1, 12.2 zur Wahrung besserer Übersichtlichkeit mit Bezugszeichen versehen sind. Die Scherenarme 10.1, 10.2, ..., 12.1, 12.2, ... werden kollektiv mit Scherenarme 10, 12 bezeichnet. Die Scherenarme 10 und 12 sind jeweils mittels Gelenken 14 und Mittenachsen 16 miteinander verbunden, von denen ebenfalls nur einzelne Gelenke 14.1, 14.2, ..., 16.1, 16.2, 16.3 ... zur Wahrung besserer Übersichtlichkeit mit Bezugszeichen versehen sind. Die Scherenarme 10.1, 10.2, ... bilden mit den Gelenken 14 und Mittenachsen 16 eine Scherenarmkette, die Scherenarme 12.1, 12.2 eine dazu parallele Scherenarmkette. Die Gelenke 14 und Mittenachsen 16 sind spielfrei bzw. besonders spielarm ausgelegt.

Wie in den nachfolgenden Fig. 2 bis 6 dargestellt ist, kann können erste Aufhängung 4 und zweite Aufhängung 6 mittels der Scherenhubmechanik 8 in unterschiedliche Abstände D zwischen erster Aufhängung 4 und zweiter Aufhängung 6 bewegt werden. Die Scherenarme 10, 12 werden dazu gegeneinander in einer eindeutigen Weise bewegt. Jedem Abstand D entspricht somit eine spezifische Stellung der entsprechenden Scherenarme 10, 12. In Fig. 1 ist ein maximaler Abstand Dmax dargestellt.

Die erste Aufhängung 4 weist eine Basis 18 auf, an der die Scherenhubmechanik 8 festgelegt ist. An der Basis 18 ist des Weiteren ein Schleifpotentiometer 20 positioniert. Das Schleifpotentiometer 20 weist einen (nicht sichtbaren) Schleifkontakt auf, der mit der Scherenhubmechanik 8 über eine der Mittenachsen 16, hier Mittenachse 16.1 (siehe Fig. 2), kraftschlüssig verbunden ist, sodass der entsprechende Schleifkontakt zusammen mit der Mittenachse in Erstreckungsrichtung E zusammen mit der entsprechenden Mittenachse 16 bewegt wird. Die Position der Mittenachse 16 ist somit proportional zum jeweiligen Abstand D der ersten Aufhängung 4 und der zweiten Aufhängung 6.

Der Hub am Schleifpotentiometer 20 hängt von der Wahl der gekoppelten Mittenachse 16.1, 16.2, ... ab, ist aber stets proportional zum Gesamthub, sodass eine Multiplikation des entsprechenden Hubes mit einem entsprechenden Faktor zur Gesamtlänge der Scherenhubmechanik 8 führt. Addition entsprechender Konstanten für die jeweilige axiale Ausdehnung von erster Aufhängung 4 und zweiter Aufhängung 6 führen dann zur Gesamtlänge D.

Die Wegaufnehmeranordnung 2 kann als gesamte Messkette kalibriert werden, wodurch ein Bezug von Ausgangsspannung des Schleifpotentiometers zur Gesamtlänge der Wegaufnehmeranordnung 2 hergestellt wird. Eventuelle Nichtlinearitäten können dabei ermittelt und bewertet werden.

Das Schleifpotentiometer 20 kann von einem nicht dargestellten Kabel mit Energie versorgt und ausgelesen werden.

Das Schleifpotentiometer 20 kann als Spannungsteiler in einer Wheatstone'schen Messbrücke verschaltet werden.

Ein Kragen 21 steht in Erstreckungsrichtung E von der Basis 18 der ersten Aufhängung 4 ab.

Erste Aufhängung 4 und zweite Aufhängung 6 können so gestaltet sein, dass die Wegaufnehmeranordnung 2 in Richtungen senkrecht zur Erstreckungsrichtung E verschwenkbar sind. Somit können entsprechende Ausweichbewegungen der Rippenbögen erfasst werden. Die entsprechende Verschwenkung kann sensorisch erfassbar sein.

Fig. 2 zeigt eine Schnittdarstellung durch die Wegaufnehmeranordnung 2 in der Position aus Fig. 1.

In Fig. 2 ist die Kopplung der Scherenarme 10, 12 über die Gelenke 14 und Mittenachsen 16 zu erkennen. Die bezeichnete Mittenachse 16.1 ist mit dem Schleifpotentiometer 20 gekoppelt, beispielsweise durch einen in diese Richtung verlängerten, in Fig. 2 nicht sichtbaren Stift, der den Schleifkontakt des Schleifpotentiometers 20 betätigt.

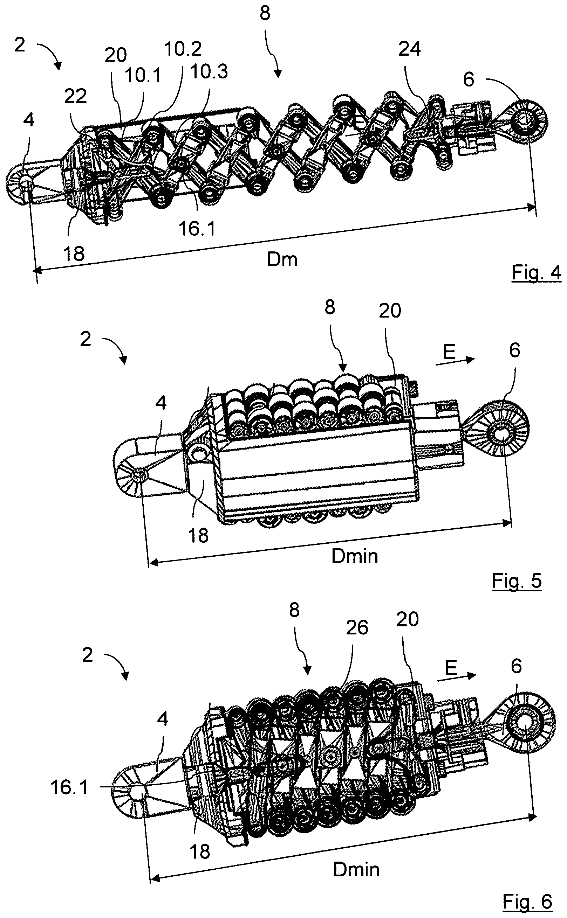

Die Scherenhubmechanik ist über Gleitstücke 22, 24 mit erster Aufhängung 4 sowie zweiter Aufhängung 6 befestigt. Die Gleitstücke 22, 24 sind T-förmig, wobei Gleitstrecken senkrecht zur Erstreckungsrichtung E und eine Gleitstrecke in Erstreckungsrichtung E zur Führung der Scherenarme 10, 12 und der Mittenachsen 16 dienen. Entsprechende Gleitstücke lassen sich präzise fertigen und reibungsarm auslegen. Somit lässt sich eine reibungsarme, präzise Führung der Scherenarme 10, 12 sowie Mittenachsen 16 gewährleisten. Die Scherenarme 10, 12 weisen Anschlagflächen 26 auf, die in vollständig eingefahrener Position (Fig. 5, 6) aneinander anliegen.

Fig. 3 zeigt die Wegaufnehmeranordnung aus den Fig. 1 und 2 in einer mittleren Stellung.

Die Position der Mittenachse 16.1, die mit dem Schleifpotentiometer 20 gekoppelt ist, hat sich entsprechend der Stellung der Scherenarme 10, 12 verändert, wodurch sich ein anderer Leitwert für das Schleifpotentiometer 20 einstellt, der repräsentativ zur aktuellen Länge Dm ist.

Fig. 4 zeigt eine Schnittdarstellung durch die Wegaufnehmeranordnung in der Stellung nach Fig. 3.

Hier ist die Position der Mittenachse 16 relativ zum Schleifpotentiometer 20 besser zu sehen. Zudem haben sich die Scherenarme 10, 12 in den Gleitstücken 22, 24 entsprechend bewegt.

Fig. 5 zeigt die Wegaufnehmeranordnung 2 aus den Fig. 1 bis 4 in vollständig eingefahrener Stellung.

Der Abstand Dmin zwischen erster Aufhängung 4 und zweiter Aufhängung 6 ist minimal. In der dargestellten Konfiguration ist die Wegaufnehmeranordnung 2 besonders kompakt und platzsparend. Das Schleifpotentiometer 20 sowie der Kragen 21 umgeben die Scherenhubmechanik weitgehend. Lediglich die Gelenke 14 stehen heraus.

Fig. 6 zeigt eine Schnittdarstellung durch die Anordnung nach Fig. 5. Die Anschlagflächen 26 liegen aneinander an.

Fig. 7 zeigt eine Wegaufnehmeranordnung 102 aus dem Stand der Technik.

Die Wegaufnehmeranordnung 102 weist ebenfalls eine erste Aufhängung 104 und eine zweite Aufhängung 106 auf. Zwischen erster Aufhängung 104 und zweiter Aufhängung 106 erstreckt sich eine Hülsenanordnung 108 mit mehreren, ineinander geschachtelten Hülsen 108.1 - 108.5.

An der zweiten Aufhängung 106 ist eine Infrarot-Leuchtdiode 110 (kurz: IR-LED) angeordnet. An der ersten Aufhängung 4 ist ein optischer Sensor 112 angeordnet. Der optische Sensor 112 empfängt das Licht der IR-LED 110. Die empfangene Lichtmenge ist aufgrund der Lichtausbreitung der IR-LED 110 abhängig vom Abstand zwischen IR-LED 110 und Sensor 112. Das von der IR-LED 110 ausgesandte Licht wird zum Teil an den Innenwänden der Hülsen 108.1 bis 108.5 reflektiert und auf den Sensor 112 gelenkt, sodass die Hülsenanordnung 108 einen Einfluss auf die Lichtmenge am Sensor 112 hat. Die relative Position der einzelnen Hülsen 108.1 bis 108.5 ist zufällig, da die Relativbewegung der Hülsen 108.1 bis 108.5 vom Losbrechmoment der Hülsen bestimmt wird. Somit ergeben sich bei ein und demselben Abstand D unterschiedliche Konfigurationen der Hülsenanordnung 108, die unterschiedliche Lichtmengen der IR-LED 110 an den Sensor 112 transportieren.

Die LED 110 wird mit einem Kabel 114 mit Strom versorgt. LED 110 und Sensor 112 benötigen eine ausreichende Versorgungsleistung.

Fig. 8 zeigt eine Schnittdarstellung durch die Wegaufnehmeranordnung aus Fig. 6 mit einer Darstellung der Kopplung der Mittenachse 16.1 mit dem Schleifpotentiometer 20 in perspektivischer Darstellung.

Die Mittenachse 16.1 weist eine Bohrung 28 auf, an der mittels einer Schraube 30 ein Mitnehmer 32 festgelegt ist. An dem Mitnehmer 32 ist ein Schleifkontakt 34 befestigt, der auf einer Schleifplatine 36 hin- und herbewegbar ist.

Das Schleifpotentiometer 20 kann als Spannungsteiler in einer Wheatstone'schen Messbrücke verschaltet werden.

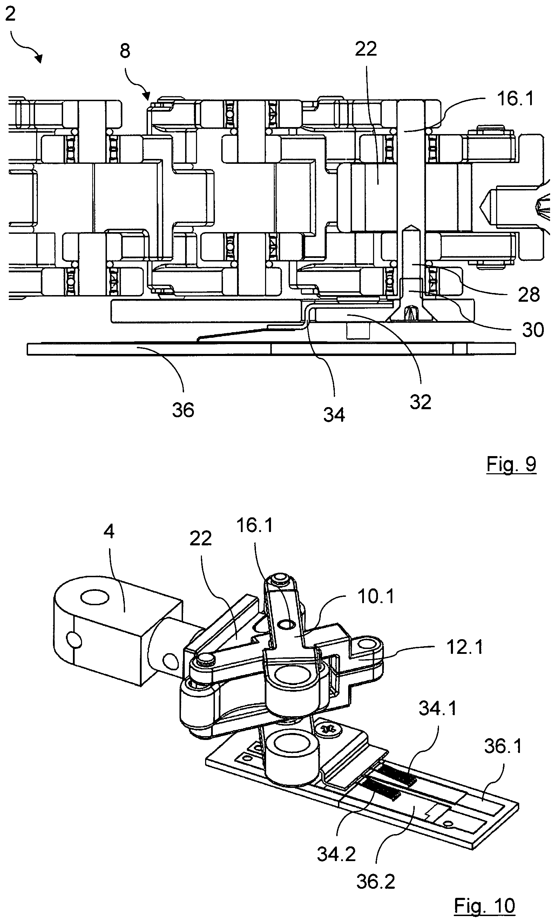

Fig. 9 zeigt eine Schnittdarstellung durch die Wegaufnehmeranordnung aus Fig. 6 mit einer Darstellung der Kopplung mit einem Potentiometer in planarer Darstellung.

Fig. 10 zeigt eine vergrößerte Darstellung der Kopplung zwischen Scherenhubmechanik und Potentiometer.

Der Schleifkontakt 34 hat Kontakte 34.1, 34.2, die gemeinsam auf Leiterbahnen 38.1, 38.2 der Schleifplatine 36 bewegt werden. Dadurch verändern sich die Widerstandsverhältnisse in eindeutiger Weise.

Durch Messen der Brückenspannung der Wheatstone'schen Messbrücke (nicht dargestellt) lässt sich jede Position der Kontakte 34.1, 34.2 einem spezifischen Messwert, z.B. einer spezifischen Spannung zuordnen. Hierdurch kann durch die vorher stattgefundene Kalibrierung eine Gesamtlänge mit hoher Präzision ermittelt werden. Die Auflösung des Systems ist sehr hoch, da das Signal-Rausch-Verhältnis hoch ist.

Das Messsystem mit dem Schleifpotentiometer 20 ist zudem sehr schnell, sodass sich hohe Geschwindigkeiten auslesen lassen. Geeignete, bekannte Schleifpotentiometer können Verfahrgeschwindigkeiten der Kontakte 34.1, 34.2 auf der Schleifplatine 36 von bis zu 10 m/s auflösen, die sich aufgrund der Übersetzung durch die Scherenhubmechanik hinsichtlich der auflösbaren Verfahrgeschwindigkeiten der Wegaufnehmeranordnung 2 vervielfachen.

In der dargestellten Ausführungsform nach den Fig. 1 bis 6, 8 bis 10 sind so theoretische Messgeschwindigkeiten von 140 m/s möglich. Der Multiplikator hängt von der konkreten Ausgestaltung der jeweiligen Wegaufnehmeranordnung ab, insbesondere von der Anzahl und Auslegung von Scherenarmen sowie von der verwendeten Mittenachse zur Kopplung der Scherenhubmechanik an das Potentiometer.

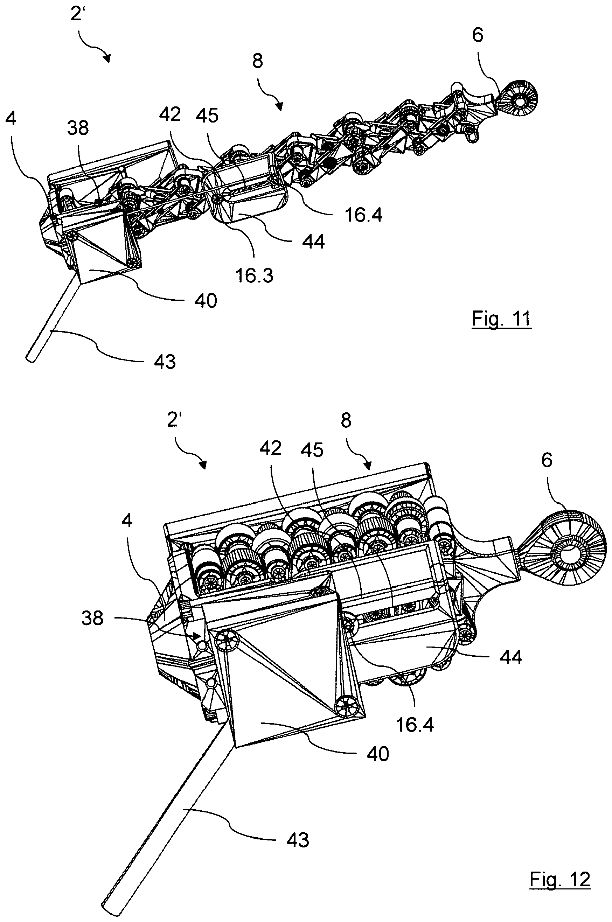

Fig. 11 zeigt eine Wegaufnehmeranordnung 2' gemäß einem Beispiel, das das Verständnis der Erfindung erleichtert, in ausgefahrener Position in perspektivischer Darstellung.

An der Wegaufnehmeranordnung 2' ist anstelle des erfindungsgemäßen Schleifpotentiometers ein Seilpotentiometer 38 vorgesehen. Das Seilpotentiometer 38 weist eine Basis 40 und ein Seil 42 auf. Die Basis 40 ist mit einer Leitung 43 verbunden, die das Seilpotentiometer 38 elektrisch kontaktiert.

Die Basis 40 ist an der ersten Aufhängung 4 seitlich der Scherenhubmechanik 8 angeordnet. Die Basis 40 weist in ihrem Inneren eine federvorgespannte Aufwickelvorrichtung für das Seil 42 sowie ein Potentiometer auf, dessen Messwert von der aktuellen Stellung der Aufwickelvorrichtung abhängt. Die Aufwickelvorrichtung stellt das Seil 42 unter Vorspannung, sodass das Seil 42 gegen die Vorspannung ausgezogen werden muss.

Das Seil 42 ist an einem Mitnehmer 44 festgelegt. Der Mitnehmer 44 wiederum ist an der Mittenachse 16.3 festgelegt. Der Mitnehmer 44 weist desweiteren ein Langloch 45 auf, in dem die Mittenachse 16.4 gleitend geführt ist. Hierdurch ist der Mitnehmer 44 stets korrekt zur Scherenhubmechanik 8 positioniert.

Eine Veränderung des Abstands zwischen erster Aufhängung 4 und zweiter Aufhängung 6 bewirkt eine Relativbewegung der Mittenachse 16.3 zur ersten Aufhängung 4. Der Hub der Mittenachse 16.3 ist proportional zum Gesamthub.

Eine Verringerung des Abstandes zwischen erster Aufhängung 4 und zweiter Aufhängung 6, wie sie bei einer Brustintrusion in einem Crashtest-Dummy vorkommt, bewirkt ein Zusammenschieben der Scherenhubmechanik 8. Der Mitnehmer 44 und das daran festgelegte Seil 42 werden durch die Aufwickelvorrichtung eingeholt und der Potentiometermesswert des Seilpotentiometers 38 ändert sich entsprechend.

Fig. 12 zeigt die Wegaufnehmeranordnung 2' aus Fig. 11 in eingefahrener Position in perspektivischer Darstellung.

In dieser Stellung ist das Seil 42 maximal in die Basis 40 eingezogen.

Die Wegaufnehmeranordnung 2' ist genauso kurz wie der Wegaufnehmeranordnung 2 in eingefahrener Stellung.

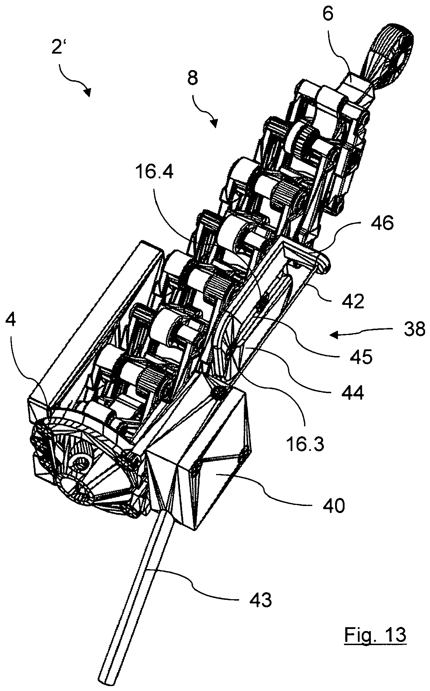

Fig. 13 zeigt die Wegaufnehmeranordnung aus Fig. 11 in mittlerer Stellung in perspektivischer Darstellung.

Das Seil 42 ist an dem Mitnehmer 44 an einem Vorsprung 46 angeordnet, um bei Geschwindigkeiten, die die maximale Einzugsgeschwindigkeit der Aufwickelvorrichtung überschreitet, ein Einklemmen des Seils 42 in der Scherenhubmechanik 8 zu verhindern. Der Mitnehmer 44 ist aus dem gleichen Grund flächig ausgebildet und schützt dadurch Seil 42 und Scherenhubmechanik 8. Der Vorsprung 46 kann z.B. ein Bolzen sein.

### Bezugszeichenliste

- 2, 2': Wegaufnehmeranordnung
- 4: erste Aufhängung
- 6: zweite Aufhängung
- 8: Scherenhubmechanik
- 10: Scherenarme
- 10.1, 10.2, ...: Scherenarm
- 12: Scherenarme
- 12.1, 12.2, ...: Scherenarm
- 14.1, 14.2, ...: Gelenke
- 16: Mittenachsen
- 16.1: gekoppelte Mittenachse
- 16.2, 16.3 ...: Mittenachse
- 18: Basis
- 20: Schleifpotentiometer
- 21: Kragen
- 22: Gleitstück
- 24: Gleitstück
- 26: Anschlagflächen
- 28: Bohrung
- 30: Schraube
- 32: Mitnehmer
- 34: Schleifkontakt
- 34.1, 34.2: Kontakt
- 36: Schleifplatine
- 36.1, 36.2: Schleifbahn
- 38: Seilpotentiometer
- 40: Basis
- 42: Seil
- 43: Leitung
- 44: Mitnehmer
- 45: Langloch
- 46: Vorsprung
- 102: Wegaufnehmeranordnung
- 104: erste Aufhängung
- 106: zweite Aufhängung
- 108: Hülsenanordnung
- 108.1, 108.2, ...: Hülse
- 110: IR-LED
- 112: Sensor
- 114: Kabel

- D, Dmax, Dm, Dmin: Abstand
- E: Erstreckungsrichtung
- 45: Langloch
- 46: Vorsprung
- 102: Wegaufnehmeranordnung
- 104: erste Aufhängung
- 106: zweite Aufhängung
- 108: Hülsenanordnung
- 108.1, 108.2, ...: Hülse
- 110: IR-LED
- 112: Sensor
- 114: Kabel

- D, Dmax, Dm, Dmin: Abstand
- E: Erstreckungsrichtung

## Patentansprüche

1. Wegaufnehmeranordnung zur Messung von Intrusionen in einem Crashtest-Dummy, mit einer ersten Aufhängung (4) und einer zweiten Aufhängung (6), wobei ein Abstand zwischen erster Aufhängung (4) und zweiter Aufhängung (6) veränderlich ist, wobei ein Wegaufnehmer (20, 38) zur Messung des Abstandes (D) zwischen erster Aufhängung (4) und zweiter Aufhängung (6) vorgesehen ist, wobei erste Aufhängung (4) und zweite Aufhängung (6) über eine Scherenhubmechanik (8) miteinander verbunden sind, wobei der Wegaufnehmer als Schleifpotentiometer (20) ausgebildet ist, **dadurch gekennzeichnet, dass** das Schleifpotentiometer (20) einen Schleifkontakt (34) aufweist, der mit der Scherenhubmechanik (8) über eine der Mittenachsen (16) der Scherenhubmechanik (8) verbunden ist.

2. Wegaufnehmeranordnung nach Anspruch 1, wobei der Schleifkontakt (34) kraftschlüssig, reibschlüssig oder stoffschlüssig mit der Scherenhubmechanik (8) verbunden ist.

3. Wegaufnehmeranordnung nach Anspruch 1 oder 2, wobei der Wegaufnehmer (20, 38) in Erstreckungsrichtung (E) zwischen erster Aufhängung (4) und zweiter Aufhängung (6) seitlich der Scherenhubmechanik (8) angeordnet ist.

4. Wegaufnehmeranordnung nach einem der vorangegangenen Ansprüche, wobei die Scherenhubmechanik (8) eine Mehrzahl von aneinander angeordneten Scherenarmen (10, 12) aufweist, die ein- und ausschwenkbar sind.

5. Wegaufnehmeranordnung nach Anspruch 4, wobei die Scherenarme (10, 12) Anschlagflächen (26) aufweisen.

6. Crashtest-Dummy mit wenigstens einer Wegaufnehmeranordnung (2, 2') nach einem der vorangegangenen Ansprüche.

## Claims

1. A displacement transducer assembly for measuring intrusions in a crash test dummy, with a first suspension (4) and a second suspension (6), wherein a distance between the first suspension (4) and second suspension (6) is variable, wherein a displacement transducer (20, 38) for measuring the distance (D) is provided between the first suspension (4) and second suspension (6), wherein the first suspension (4) and second suspension (6) are connected with each other via a scissors lifting mechanism (8), wherein the displacement transducer is designed as a sliding potentiometer (20), **characterized in that** the sliding potentiometer (20) has a sliding contact (34) that is connected with the scissors lifting mechanism (8) by one of the central axes (16) of the scissors lifting mechanism (8).

2. The displacement transducer assembly according to claim 1, wherein the sliding contact (34) is non-positively, frictionally or integrally connected with the scissors lifting mechanism (8).

3. The displacement transducer assembly according to claim 1 or 2, wherein the displacement transducer (20, 38) is arranged between the first suspension (4) and second suspension (6) in the direction of extension (E), to the side of the scissors lifting mechanism (8).

4. The displacement transducer assembly according to one of the preceding claims, wherein the scissors lifting mechanism (8) has a plurality of scissor arms (10, 12) arranged one against the other, which can be inwardly and outwardly swiveled.

5. The displacement transducer assembly according to claim 4, wherein the scissor arms (10, 12) have stop surfaces (26) .

6. A crash test dummy with at least one displacement transducer assembly (2, 2') according to one of the preceding claims.

## Revendications

1. Système de capteur de déplacement destiné à la mesure d'intrusions dans un mannequin anthropomorphe avec une première suspension (4) et une deuxième suspension (6), sachant qu'une distance peut être modifiée entre la première suspension (4) et la deuxième suspension (6), sachant qu'un capteur de déplacement (20, 38) destiné à la mesure de la distance (D) entre la première suspension (4) et la deuxième suspension (6) est prévu, sachant que la première suspension (4) et la deuxième suspension (6) sont reliées entre elles par le biais d'un mécanisme de levage articulé (8), sachant que le capteur de déplacement est constitué comme un potentiomètre de contact (20), **caractérisé en ce que** le potentiomètre de contact (20) comporte un contact par frottement (34), qui est relié au mécanisme de levage articulé (8) par un des axes médians (16) du mécanisme de levage articulé (8).

2. Système de capteur de déplacement selon la revendication 1, sachant que le contact par frottement (34) est relié par conformité de force, par conformité de frottement ou conformité de matière au mécanisme de levage articulé (8).

3. Système de capteur de déplacement selon la revendication 1 ou 2, sachant que le capteur de déplacement (20, 38) est disposé latéralement au mécanisme de levage articulé (8) dans le sens de l'extension (E) entre la première suspension (4) et la deuxième suspension (6).

4. Système de capteur de déplacement selon l'une quelconque des revendications précédentes, sachant que le mécanisme de levage articulé (8) comporte une pluralité de bras extensibles (10, 12) disposés l'un à côté de l'autre, qui peuvent être rentrés et déployés.

5. Système de capteur de déplacement selon la revendication 4, sachant que les bras extensibles (10, 12) comportent des surfaces de butée (26).

6. Mannequin anthropomorphe avec au moins un système de capteur de déplacement (2, 2') selon l'une quelconque des revendications précédentes.
